# EUROPEAN PATENT SPECIFICATION

(11) **EP 1 492 403 B1**
(45) Date of publication and mention of the grant of the patent: **04.05.2011**
(21) Application number: 03712385.8
(22) Date of filing: 21.03.2003
(51) Int. Cl.: A01N 25/30, A01N 57/20

(54) **LOW FOAMING FORMULATION OF GLYPHOSATE**
SCHWACH SCHÄUMENDE FORMULIERUNG AUS GLYPHOSAT
FORMULATION DE GLYPHOSATE FAIBLEMENT MOUSSANTE

(30) Priority: 28.03.2002 GB 0207438
(43) Date of publication of application: 05.01.2005
(73) Proprietor: Syngenta Limited, Guildford Surrey GU2 7YH (GB); Syngenta Participations AG, 4058 Basel (CH)
(72) Inventor: BARNES, Clyde James, III, 4058 Basel (CH); BAYLIS, Alan David, Syngenta Limited, Berkshire RG42 6EY (GB); FOWLER, Jeffrey David, Greensboro, NC 27409 (US); NELSON, Alan Frederick, Greensboro, NC 27409 (US)
(74) Representative: Ward, Steven Paul
(86) International application number: PCT/GB2003/001196
(87) International publication number: WO 2003/082009

(56) References cited:
- EP-A- 0 297 305
- WO-A-96/00010
- WO-A-98/15181
- WYRILL J B ET AL: "GLYPHOSATE TOXICITY TO COMMON MILKWEED AND HEMP DOGBANE AS INFLUENCED BY SURFACTANTS" WEED SCIENCE, WEED SCIENCE SOCIETY OF AMERICA, CHAMPAIGN, IL, US, vol. 25, no. 3, 1 May 1977 (1977-05-01), pages 275-287, XP002034447 ISSN: 0043-1745

## Description

This invention relates to a formulation and in particular to a formulation of the herbicide glyphosate.

Formulations of the herbicide glyphosate are generally available in the form of a concentrate which is diluted with water by the user prior to application. For large-scale agricultural use the dilution of the concentrate normally takes place in a spray tank from which the diluted product is applied through a suitable spraying apparatus. A common problem encountered is that of excessive foaming of the concentrate. Many glyphosate formulations therefore contain commercially available anti-foam agents designed to minimise this problem, see for example WO 98/15181 Anti-foam agents are normally effective at low concentration (typically of the order of 0.5 to 10 g/l, for example about 1 g/l). This concentration is much lower than that of bioperformance enhancing adjuvants which may also be present in the formulation (typically about 100 to 150 g/l), anti-foam agents are normally assumed to have little or no effect on bioperformance.

We have now found that certain polyethyleneoxide alkanols are effective as anti-foam agents and, despite being present at relatively low concentration, additionally have surprising beneficial effects on bioperformance.

According to the present invention there is provided a low-foaming herbicidal composition comprising glyphosate and a poly(alkylene oxide) alkanol having the formula 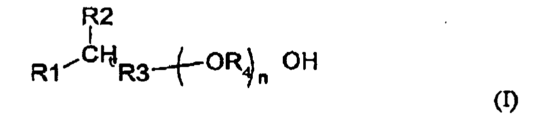 wherein R₁ and R₂ are methyl or ethyl, R₃ is a straight chain alkylene group containing from 5 to 12 carbon atoms, R₄ is an alkylene group containing 2 or 3 carbon atoms and n is from 4 to 20, wherein the concentration of the glyphosate is from 240 to 550 g/l based on glyphosate acid.

According to a further aspect of the present invention there is provided a method of reducing the foaming of a glyphosate concentrate composition having a concentration of from 240 to 550 g/l based on glyphosate acid which comprised incorporating in the composition a poly(alkylene oxide) alkanol of formula (I).

The group (OR₄)ₙ is suitably a poly (ethylene oxide) group, poly (propylene oxide) group or a mixed poly (ethylene oxide/propylene oxide) group. In the case of compounds having a range of degrees of alkoxyoxylation, n may be an average number. It is preferred that n is from 6 to 14, for example from 6 to 10. An especially preferred value of n is about 8.

R₁ and R₂ are preferably both methyl. R₃ preferably contains from 7 to 11 carbon atoms and an especially preferred group R₃ is -(CH₂)₁₀-.

A preferred poly(alkylene oxide) alkanol of formula (I) is ethoxylated, propoxylated or mixed alkoxylated/propoxylated iso-tridecyl alcohol wherein the degree of alkoxylation is from 6 to 14, for example about 8.

Glyphosate is normally used in the form of a water-soluble salt of glyphosate acid (N-phosphonomethylglycine) and the term glyphosate as used herein includes glyphosate acid and its salts, esters and derivatives. Typical glyphosate salts include isopropylamine, trimethylsulphonium, monoethanolamine, ammonium, potassium and sodium. As indicated previously, the present invention is particularly relevant to the formulation of glyphosate concentrates. Such concentrates typically contain of the order of 240 g/l based on glyphosate acid, although there is a move towards more concentrated formulations for example from 240 to 550 g/l, depending on the nature of the salt employed. For the potassium salt, it is possible to produce formulations having a concentration of up to 550 g/l, for example from 400 to 550 g/l and in particular around 500 g/l, whilst for the ammonium salt, more typical ranges are from 240 to 400 g/l and more particularly from 340 to 380 g/l based on glyphosate acid.

It is a particular feature of preferred aspects of the present invention that the compound of formula (I) operates both as an anti-foam and as a bioperformance enhancing agent at lower concentrations than are conventional for bioperformance enhancing adjuvants. Thus whilst higher proportions of the compound of formula (I) may be used, the benefits of the invention are most apparent when the concentration of the compound of formula (I) is below 100 g/l, for example from 0.1 to 100 g/l. A concentration of the compound of formula (I) of at least 1 g/l is preferred, for example from 1 to 50 g/l and especially from 1 to 20 g/l.

It is a further advantage of the present invention that the compound of formula (I) remains fully dispersed on storage of the composition. In contrast certain commonly used commercial anti-foams tend to separate out from the composition on storage and thereby lose their effectiveness, particularly if the concentrate is re-distributed from bulk storage into smaller containers.

It will be appreciated that relatively low levels of the compound of formula (I) are unlikely to provide sufficient bioperformance enhancement on their own and it is preferred that the compound of formula (I) is used with one or more additional bioperformance enhancing adjuvants. A wide range of bioperformance enhancing adjuvants suitable for use with glyphosate are well known in the art. We have found that the combination of a compound of formula (I) with an alkylglycoside adjuvant provides an unexpectedly high level of bioperformance enhancement of glyphosate combined with an effective anti-foam action, particularly with respect to foaming of the concentrate. The effect is of such a magnitude that it is believed that there is a beneficial interaction or synergy between the compound of formula (I) and the alkylglycoside.

The alkylglycoside for use in the present invention may be obtained by the reaction of alkanols with glucose or other mono- or di- or polysaccharides. As used herein the term "alkylglycoside" includes an alkylmonoglycoside and an alkylpolyglycoside. Preferred alkylglycosides for use in the present invention are alkylglucosides obtained by the reaction of glucose with a straight or branched chain alkanol or mixture of alkanols, for example a mixture of alkanols containing 7 to 18, preferably 7 to 16 carbon atoms for example 8 to 10 carbon atoms. The number of glycose groups per alkyl group in the molecule may vary and alkyl mono- or di- or polyglucose or saccharide derivatives are possible. Commercial alkylpolyglucosides usually contain a mixture of derivatives having an average number of glycose groups per alkyl group. Thus alkylglycosides have the general formula (III) 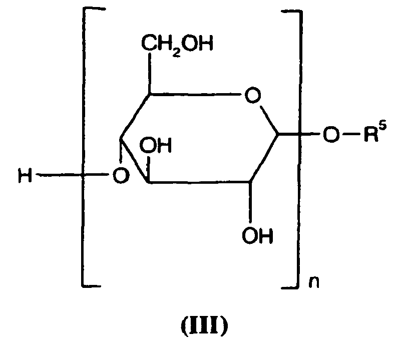 wherein n is the degree of polymerisation and is typically within the range from 1 to 3, for example from 1 to 2, and R⁵ is a branched or straight chain alkyl group having from 4 to 18 carbon atoms or a mixture of alkyl groups having an average value within the given range. Typical of alkylglycosides is the product commercially available under the trade names AL2042 and AL2575 (Uniqema) and AGRIMUL PG2067 (Henkel Corp) wherein n is an average of 1.7 and R⁵ is a mixture of octyl (45%) and decyl (55%), the product commercially available under the trade name AGRIMUL PG2069 (Henkel Corp) wherein n is an average of 1.6 and R⁵ is a mixture of nonyl (20%), decyl (40%) and undecyl (40%) and the product commercially available under the trade name BEROL AG6202 (Akzo Nobel) or AGRIMUL PG 3399 (Henkel Corp) which is 2-ethyl-1-hexylglycoside.

The additional bioperformance enhancing adjuvant, for example the alkylglycoside, is suitably used at conventional concentrations of from about 80g/l to about 250g/l, for example from about 100g/l to about 150g/l and the ratio of the compound of formula (I) to the second bioperformance enhancing adjuvant is preferably from about 1 : 1 to 1 : 100 and more preferably from 1 : 10 to 1 : 40.

The compound of formula (I) may be used as the sole anti-foam agent or may be used in combination with or as a partial replacement for another anti-foam agent. The compound of formula (1) is primarily intended to reduce foaming of the concentrate. Other anti-foams whose primary purpose is to reduce foaming of the diluted product may be used in addition to the compound of formula (I). A typical example of an anti-foam for reducing foaming of the diluted product is MSA supplied by Dow Coming which consists of a polydimethyl siloxane oil blended with hydrophobic silicas.

Other conventional additives such as humectants, activity enhancers (such as inorganic ammonium salts), anti-freeze agents, wetters, or other additional surfactants may be added if desired. Similarly, additional water-soluble herbicides or other agrochemicals such as fungicides and insecticides may be incorporated if desired but the present invention is primarily concerned with compositions in which the only active agrochemical ingredient is glyphosate.

When diluted for use, compositions of the present invention are active against a broad range of weed species including monocotyledonous and dicotyledonous species. The compositions are suitably applied directly to unwanted plants (post-emergence application).

Thus according to a further aspect of the present invention there is provided a process of severely damaging or killing unwanted plants which comprises diluting a concentrated composition of the present invention and applying to the plants a herbicidally effective amount of a said diluted composition.

The rate of application of the composition of the invention will depend on a number of factors including, for example, the identity of the plants whose growth is to be inhibited and whether the compound is to be applied for foliage or root uptake. As a general guide, however, an application rate of from 0.001 to 20 kilograms per hectare is suitable while from 0.025 to 10 kilograms per hectare may be preferred.

It is especially preferred that the glyphosate is in the form of the potassium salt or an ammonium salt. The present invention is illustrated in its application to the formulation of potassium and ammonium glyphosate respectively but is not limited to these glyphosate products. Ammonium and potassium glyphosate are particularly suitable salts for use in high-strength glyphosate concentrates in which an effective proportion of a surfactant system and inorganic adjuvant is "built-in" to the composition. The term "built-in" as used herein indicates a composition in which the required primary adjuvants are contained within a physically stable concentrate composition and do not have to be added during the tank mix stage. This does not of course preclude the operator adding further adjuvants during tank mix if desired, but there is no necessity for the addition of further adjuvants. The difficulties of providing effective high-strength glyphosate concentrates containing adjuvant systems are considerable, since such concentrates have to be physically stable over extended storage at the possible extremes of ambient temperatures likely to be encountered in commercial usage.

As used herein, the term "high-strength" aqueous glyphosate concentrate indicates a concentrate in which the glyphosate concentration is greater than 240 g/l based on glyphosate acid content, for example from 240 to 550 g/l such as from 240 to 400 g/l. An especially preferred concentration for use with ammonium glyphosate formulations is from 340 to 380 g/l based on glyphosate acid. For the potassium salt, it is possible to produce formulations having a concentration of up to 550 g/l, for example from 400 to 550 g/l and in particular around 500 g/l. It should be noted that, unless otherwise stated, all concentrations of glyphosate are given herein in terms of the percentage by weight of glyphosate acid even when the glyphosate anion is balanced by a suitable cation.

The ammonium glyphosate composition may alternatively be thought of as a combination of the ammonium salt of glyphosate, an ammonium salt such as ammonium sulphate or diammonium phosphate and the alkylglycoside. It will be appreciated however that once in solution, the composition is characterised by a total ammonium cation content balanced by glyphosate anion and, for example sulphate anion. It is convenient nevertheless to express the content of the formulation in terms of ammonium salt content and ammonium glyphosate content. The ammonium glyphosate composition of the present invention provides a physically stable composition even at a high loading of ammonium salt, for example ammonium sulphate, without having to reduce either the surfactant concentration or the glyphosate concentration. This is particularly surprising in view of the high electrolyte content of the composition. Thus to achieve a satisfactory enhancement of the activity of glyphosate, it is desirable to incorporate more than 70 g/l ammonium salt and preferably more than about 80 g/l. The upper limit of content of ammonium salt will depend on the desired content of surfactant and glyphosate ion and whilst levels as high as 180 g/l may be used if desired, the practical upper limit of the content of ammonium salt will normally be 160 g/l, or more preferably 150 g/l. Especially effective results are obtained with a content of ammonium salt of from 80 to 140 g/l since a surprisingly high and effective loading of glyphosate ion and alkylglycoside surfactant respectively may be obtained in such compositions.

As noted above, whilst the ammonium ion present in the aqueous ammonium glyphosate composition should not be thought of as being associated specifically with either with the glyphosate anion or for example the sulphate anion, it is convenient to express the concentration of ammonium ion relative to glyphosate ion as being in addition to that present in the "ammonium salt" such as ammonium sulphate. Thus the molar ratio of ammonium ion (in excess of that in the "ammonium salt") to glyphosate anion is preferably from 1.5 : 1 to 2:1, for example from 1.7 : 1 to 1.9 : 1. Particularly effective results are obtained at a ratio of (excess) ammonium ion to glyphosate ion of about 1.9 : 1.

As noted above, the content of the alkylglycoside surfactant system in the aqueous concentrate is generally from about 80 to 250g/l. The upper limit of 250 g/l is more appropriate when relatively lower levels of ammonium salt are used whilst the lower limit of 80 g/l is more appropriate when relatively higher levels of ammonium salt are used. Preferably therefore when the content of the ammonium salt content is from about 80 to about 100 g/l, the content of the alkylglycoside is from about 250 g/l to about 200 g/l, for example from about 245 g/l to about 210 g/l. When the content of the ammonium salt is from about 100 g/l to about 150 g/l, the content of the alkylglycoside is from about 140 g/l to about 200 g/l, for example about 140 g/l to about 175 g/l. The potassium salt is generally less sensitive to the presence of alkylglycoside and the optimum bioperformance enhancing level may be selected for the concentration of glyphosate to be used.

It is a particular advantage of the ammonium and potassium glyphosate composition of the present invention that a single surfactant, the alkylglycoside may be used as the sole additional bioperformance enhancing agent with the compound of formula (I), thus providing processing and supply advantages.

If desired however, a proportion of the alkylglycoside in the glyphosate composition (whether it is ammonium or another salt) may be replaced by an alkoxylated alkylamine and in some circumstances a further increase in biological activity may be observed thereby. The phrase "alkylglycoside surfactant system" as used above includes both the alkylglycoside and the alkoxylated alkylamine, if used and the preferred concentrations given above thus include both the alkylglycoside surfactant and the alkoxylated alkylamine, if used.

The ratio of alkylglycoside to alkoxylated alkylamine in the alkylglycoside surfactant system is preferably from about 1 part by weight of alkylglycoside per 1 part by weight of alkoxylated alkylamine to about 10 parts by weight of alkylglycoside per 1 part by weight of alkoxylated alkylamine. An especially preferred ratio is from about 5 to about 8 parts by weight of alkylglycoside per 1 part by weight of alkoxylated alkylamine.

Suitably the alkyl group in the alkoxylated alkylamine contains from 8 to 22 carbon atoms (or an average of from 8 to 22 carbon atoms if a mixture of alkyl groups is present) and may be linear or branched. It is especially preferred that the alkyl group contains from 10 to 20 carbon atoms. Specific examples of preferred alkoxylated alkylamines are alkoxylated derivatives of cocamine, tallowamine, oleylamne and stearylamine. Typically such alkoxylated alkylamine surfactants are available with an average degree of alkoxylation of from 1 to about 15. Suitable alkoxy groups include ethoxy, propoxy or a mixture thereof. Ethoxy is particularly preferred.

Whilst it is possible to use an alkoxylated alkylamine in the composition of the present invention having an average degree of alkoxylation (or more specifically ethoxylation) in the commercially available range, for example from 1 to about 15, we have found that ethoxylated alkylamines having a high degree of ethoxylation are less compatible with the high-strength composition than are those having a lower degree of ethoxylation. Thus it is preferred that the average degree of alkoxylation (or more specifically ethoxylation) is from 2 to 12. Thus it is especially preferred that the average degree of alkoxylation (or more specifically ethoxylation) is from 2 to 5. An example of a particularly suitable alkoxylated alkylamine is an ethoxylated alkylamine having an average degree of ethoxylation of about 2 or about 5, for example an ethoxylated cocoamine having an average degree of ethoxylation of about 2 or about 5.

Whilst advantages may be obtained through the replacement of a proportion of the alkylglycoside with an alkoxylated alkylamine, such advantages are offset by an increase in viscosity of the composition.

If the viscosity of the composition is high, for example if an alkoxylated alkylamine is used, it may be appropriate to add a viscosity modifying agent. Suitable viscosity modifying agents include propylene glycol.

The compositions of the present invention may be made by mixing the components in the desired proportions. The particular combination of ions in the composition of the present invention may be obtained from a range of different starting materials. The order of addition is not particularly important. Thus for example solid diammonium glyphosate and glyphosate acid (to give the desired ammonium to glyphosate ion ratio) may be added with solid ammonium sulphate into water into which the alkylglycoside has been dissolved. Alternatively ammonia may be added to glyphosate acid in the presence of ammonium sulphate or alternatively still, ammonia may be added to glyphosate acid in the presence of sulphuric acid.

Compositions of the present invention may also be provided in a diluted and ready-to-use form. Additional adjuvants suitable for ready-to-use formulations may also be added e.g. antifreeze, polymers and dyes.

The invention is illustrated by the following Examples in which all parts and percentages are by weight unless otherwise stated.

### EXAMPLE 1

In the following Examples, compositions were prepared by adding ammonia to neutralise glyphosate acid (PMG acid) in the form of an aqueous slurry in order to generate the desired ratio of ammonium ion to glyphosate (1.9 : 1). The remaining components were added in the indicated proportions (% w/w) and water was added proportionately to make up the balance. The compound of formula (I) was GENAPOL X080, iso-tridecyl alcohol having 8 polyethylene oxide units (n in formula (I) is 8). The alkylglycoside was AL2575, from UNIQEMA.

A comparison was prepared in which no compound of formula (I) was used. The quantity of alkylglycoside was increased proportionately and additional anti-foam was added.

Both the composition of the invention and the comparison with added conventional antifoam had satisfactory and essentially equivalent foaming characteristics.

In the following Table, compositions are given as % w/w at a composition density of 1.28 g/cm³:

**Table 1**

| | Example 1 | Comparison |
|---|---|---|
| Glyphosate acid (as technical wet paste) | 28 | 28 |
| Ammonia (anhydrous) | 8.2 | 8.2 |
| Sulphuric acid (96% Commercial) | 8.5 | 8.5 |
| AL2575 | 13.0 | 13.4 |
| Antifoam MSA | 0.05 | 0.05 |
| Fluowet PL80 | 0 | 0.055 |
| Isotridecyl alcohol 8EO | 5.0 | 0 |
| Water | To 100% | To 100% |

Fluowet PL80 is 50:50 mix of perfluorinated alkyl phosphinic and perfluorinated alkyl phosphonic acid, supplied by CLARIANT. Antifoam MSA is based on polydimethylsiloxane supplied by Dow Coming.

### EXAMPLE 2

The compositions of Example 1 (composition of the invention and comparison) were applied at the indicated rated expressed as glyphosate acid equivalent/ha to plant species grown in the glasshouse. All treatments were made up in tap water and applied using a track-sprayer with a 11002 nozzle at a spray application volume of 2001/ha. All treatments were replicated 3 times. After spraying the plants were laid out in a glasshouse and maintained at a temperature of 24°C by day and 19°C by night. A visual assessment of % control, where 0=unaffected and 100=omplete kill, was carried out 22 days after treatment.

**Table 2**

| % Control Against Indicated Species | | | | | | |
|---|---|---|---|---|---|---|
| | Rate | | | | | |
| Composition | | AVEFA | BRODI | CHEAL | LOLRI | RAPRL |
| Comparison 1 | 240 | 32 | 3 | 57 | 7 | 20 |
| | 360 | 76 | 42 | 78 | 53 | 55 |
| | 540 | 86 | 87 | 92 | 73 | 85 |
| | 720 | 100 | 93 | 93 | 98 | 92 |
| Example 1 | 240 | 48 | 15 | 87 | 25 | 58 |
| | 360 | 65 | 85 | 87 | 78 | 80 |
| | 540 | 62 | 100 | 92 | 95 | 73 |
| | 720 | 96 | 100 | 99 | 100 | 93 |

The species tested were: -
- AVEFA: Wild Oat (*Avena fatua*)
- BRODI: *Bromus diandrus*
- CHEAL: common lambsquarters *(Chenopodium album L.)*
- LOLRI: *Lolium rigidum*
- RAPRL: *Raphanus raphanistrum*

### EXAMPLES 3 and 4

In the following Examples, compositions were prepared by adding potassium hydroxide to neutralise glyphosate acid (PMG acid). The remaining components were added in the indicated proportions (g/l) and water was added proportionately to make up the balance. The compound of formula (I) was GENAPOL X080, iso-tridecyl alcohol having 8 polyethylene oxide units (n in formula (I) is 8). The alkylglycoside was AL2575 (or the equivalent AGRIMUL PG2067) and was used in combination with an ethoxylated cocoamine having a degree of ethoxylation of 5. A comparison (Comparison 2) was prepared in which no compound of formula (I) was used.. The foaming characteristics of the composition of the invention and comparison were measured using the standard method of CIPAC MT 47.2 are the results are shown in Table 4.

**Table 3**

| Component | Example 3 | Example 4 | Comparison 2 |
|---|---|---|---|
| Glyphosate acid 100% | 500 | 500 | 500 |
| Potassium hydroxide (KOH) 50% | 371 | 371 | 371 |
| AL2575 | 171 | 171 | 171 |
| Alkoxylated cocoamine | 46 | 46 | 46 |
| Genapol X080 | 2.74 | 6.85 | 0.0 |
| Water | To 1 litre | To 1 litre | To 1 litre |

**Table 4**

| | Foam height at 10 seconds (mm) | Foam height at 60 seconds (mm) | Foam height at 180 seconds (mm) | Foam height at 720 seconds (mm) |
|---|---|---|---|---|
| Comparison 2 | 45 | 60 | 50 | 44 |
| Example 3 | 8 | 18 | 16 | 6 |
| Example 4 | 14 | 18 | 20 | 18 |

### EXAMPLES 5 and 6

In the following Examples, compositions were prepared by adding potassium hydroxide to neutralise glyphosate acid (PMG acid). The remaining components were added in the indicated proportions (g/l) and water was added proportionately to make up the balance. The compound of formula (I) was GENAPOL X080, iso-tridecyl alcohol having 8 polyethylene oxide units (n in formula (I) is 8). The alkylglycoside was AGRIMUL PG 3399 and was used in combination with an ethoxylated cocamine having a degree of ethoxylation of 5. AGRIMUL PG 3399 is a low-foaming alkylglycoside. A comparison (Comparison 3) was prepared in which no compound of formula (I) was used.

The foaming characteristics of the composition of the invention and comparison were measured using the standard method of CIPAC MT 47.2 are the results are shown in Table 6.

**Table 4**

| Component | Example 5 | Example 6 | Comparison 3 |
|---|---|---|---|
| Glyphosate acid 100% | 500 | 500 | 500 |
| Potassium hydroxide (KOH) 50% | 371 | 371 | 371 |
| AGRIMUL PG 3399 | 184 | 184 | 184 |
| Alkoxylated cocoamine | 46 | 46 | 46 |
| Genapol X080 | 2.74 | 6.85 | 0.0 |
| Water | To 1 litre | To 1 litre | To 1 litre |

**Table 5**

| | Foam height at 10 seconds (mm) | Foam height at 60 seconds (mm) | Foam height at 180 seconds (mm) | Foam height at 720 seconds (mm) |
|---|---|---|---|---|
| Comparison 3 | 38 | 36 | 32 | 20 |
| Example 5 | 10 | 18 | 16 | 10 |
| Example 6 | 18 | 24 | 24 | 24 |

## Claims

1. A composition comprising glyphosate and a poly(alkylene oxide) alkanol having the formula 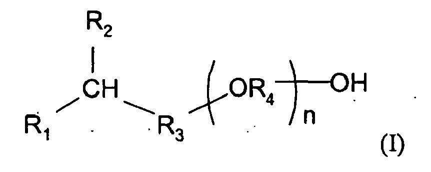 therein R₁ and R₂ are methyl or ethyl, R₃ is a straight chain alkylene group containing from 5 to 12 carbon atoms, R₄ is an alkylene group containing 2 or 3 carbon atoms and n is from 4 to 20, wherein the concentration of the glyphosate is from 240 to 550 g/l based on glyphosate acid.

2. A composition according to claim 1 wherein the group (OR₄)ₙ is a poly (ethylene oxide) group, poly (propylene oxide) group or a mixed poly (ethylene oxide/propylene oxide) group.

3. A composition according to claim 1 or 2 wherein n is from 6 to 14.

4. A composition according to claim 3 wherein n is from 6 to 10.

5. A composition according to any of the preceding claims wherein R₁ and R₂ are both methyl.

6. A composition according to any of the preceding claims wherein R₃ contains from 7 to 11 carbon atoms.

7. A composition according to any of claims 1 to 3 wherein the poly(alkylene oxide) alkanol of formula (I) is ethoxylated, propoxylated or mixed ethoxylated/propoxylated iso-tridecyl alcohol wherein the degree of alkoxylation is from 6 to 14.

8. A composition according to claim 7 wherein the poly(alkylene oxide) alkanol of formula (1) is isotridecyl alcohol having a degree of alkoxylation of 8.

9. A composition according to any of the preceding claims wherein the concentration of the compound of formula (I) is from 1 to 50 g/l.

10. A composition according to claim 9 wherein the concentration of the compound of formula (I) is from 1 to 20 g/l.

11. A composition according to any of the preceding claims which contains an additional bioperformance enhancing adjuvant.

12. A composition according to claim 11 wherein the additional bioperformance enhancing adjuvant is an alkylglycoside.

13. A composition according to claim 11 or 12 wherein the additional bioperformance enhancing adjuvant is present at a concentration of from 80 g/l to 250 g/l.

14. A composition according to claim 12 or 13 which additionally contains an alkoxylated alkylamine.

15. A composition according to any of the preceding claims which comprises an additional anti-foam to reduce foaming of the diluted product.

16. A composition according to any of the preceding claims wherein the glyphosate is a potassium salt.

17. A composition according to claim 16 wherein the concentration of the glyphosate is from 400 to 500 g/l based on glyphosate acid.

18. A composition according to any of claims 1 to 15 wherein the glyphosate is an ammonium salt.

19. A composition according to claim 18 wherein the concentration of the glyphosate is from 340 to 380 g/l based on glyphosate acid.

20. A composition according to claim 18 or 19 which additionally contains ammonium sulphate at a concentration of from 80 to 140 g/l.

21. A method of reducing the foaming of a glyphosate concentrate composition having a concentration of from 240 to 550 g/l based on glyphosate acid which comprises incorporating in the composition a poly(alkylene oxide) alkanol of formula (I) of claim 1.

22. A process of severely damaging or killing unwanted plants which comprises diluting a glyphosate concentrate composition according to any of claims 1 to 20 and thereafter applying to the plants a herbicidally effective amount of said diluted composition.

## Patentansprüche

1. Zusammensetzung, umfassend Glyphosat und ein Poly(alkylenoxid)alkanol der Formel: 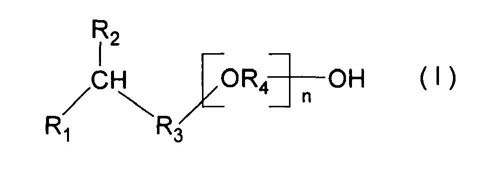 worin R₁ und R₂ Methyl oder Ethyl sind, R₃ eine geradkettige Alkylengruppe mit 5 bis 12 Kohlenstoffatomen ist, R₄ eine Alkylengruppe mit 2 oder 3 Kohlenstoffatomen ist und n 4 bis 20 ist, wobei die Konzentration des Glyphosats 240 bis 550 g/ℓ , bezogen auf Glyphosatsäure, beträgt.

2. Zusammensetzung gemäss Anspruch 1, wobei die Gruppe (OR₄)ₙ eine Poly(ethylenoxid)-Gruppe, Poly(propylenoxid)-Gruppe oder eine gemischte Poly(ethylenoxid/propylenoxid)-Gruppe ist.

3. Zusammensetzung gemäss Anspruch 1 oder 2, wobei n 6 bis 14 ist.

4. Zusammensetzung gemäss Anspruch 3, wobei n 6 bis 10 ist.

5. Zusammensetzung gemäss einem der vorhergehenden Ansprüche, wobei R₁ und R₂ beide Methyl sind.

6. Zusammensetzung gemäss einem der vorhergehenden Ansprüche, wobei R₃ 7 bis 11 Kohlenstoffatome enthält.

7. Zusammensetzung gemäss einem der Ansprüche 1 bis 3, wobei das Poly(alkylenoxid)alkanol der Formel (I) ethoxylierter, propoxylierter oder ein gemischter ethoxylierter/propoxylierter Isotridecylalkohol ist, wobei der Alkoxylierungsgrad 6 bis 14 beträgt.

8. Zusammensetzung gemäss Anspruch 7, wobei das Poly(alkylenoxid)alkanol der Formel (I) Isotridecylalkohol mit einem Alkoxylierungsgrad von 8 ist.

9. Zusammensetzung gemäss einem der vorhergehenden Ansprüche, wobei die Konzentration der Verbindung der Formel (I) 1 bis 50 g/ℓ beträgt.

10. Zusammensetzung gemäss Anspruch 9, wobei die Konzentration der Verbindung der Formel (I) 1 bis 20 g/ℓ beträgt.

11. Zusammensetzung gemäss einem der vorhergehenden Ansprüche, welche einen zusätzlichen, die Bioleistungsfähigkeit erhöhenden Hilfsstoff enthält.

12. Zusammensetzung gemäss Anspruch 11, wobei der zusätzliche, die Bioleistungsfähigkeit erhöhende Hilfsstoff ein Alkylglycosid ist.

13. Zusammensetzung gemäss Anspruch 11 oder 12, wobei der zusätzliche, die Bioleistungsfähigkeit erhöhende Hilfsstoff in einer Konzentration von 80 bis 250 g/ℓ vorliegt.

14. Zusammensetzung gemäss Anspruch 12 oder 13, welcher zusätzlich ein alkoxyliertes Alkylamin enthält.

15. Zusammensetzung gemäss einem der vorhergehenden Ansprüche, welche einen zusätzlichen Entschäumer umfasst, der das Schäumen des verdünnten Produkts verringert.

16. Zusammensetzung gemäss einem der vorhergehenden Ansprüche, wobei das Glyphosat ein Kaliumsalz ist.

17. Zusammensetzung gemäss Anspruch 16, wobei die Konzentration an Glyphosat 400 bis 500 g/ℓ, bezogen auf Glyphosatsäure, beträgt.

18. Zusammensetzung gemäss einem der Ansprüche 1 bis 15, wobei das Glyphosat ein Ammoniumsalz ist.

19. Zusammensetzung gemäss Anspruch 18, wobei die Konzentration an Glyphosat 340 bis 380 g/ℓ, bezogen auf Glyphosatsäure, beträgt.

20. Zusammensetzung gemäss Anspruch 18 oder 19, welche zusätzlich ein Ammoniumsulfat in einer Konzentration von 80 bis 140 g/ℓ enthält.

21. Verfahren zur Verringerung des Schäumens einer Glyphosatkonzentrat-Zusammensetzung mit einer Konzentration von 240 bis 550 g/ℓ, bezogen auf Glyphosatsäure, welches das Aufnehmen eines Poly(alkylenoxid)alkanols der Formel (I) gemäss Anspruch 1 in die Zusammensetzung umfasst.

22. Verfahren zur schweren Schädigung oder Abtötung unerwünschter Pflanzen, welches die Verdünnung einer Glyphosatkonzentrat-Zusammensetzung gemäss einem der Ansprüche 1 bis 20 und danach das Anwenden einer herbizid wirksamen Menge dieser verdünnten Zusammensetzung an Pflanzen umfasst.

## Revendications

1. Composition comprenant du glyphosate et un poly(oxyde d'alkylène) alcanol ayant la formule 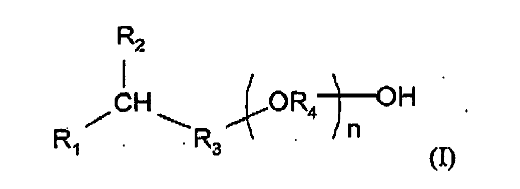 où R₁ et R₂ sont méthyle ou éthyle, R₃ est un groupe alkylène linéaire contenant de 5 à 12 atomes de carbone, R₄ est un groupe alkylène contenant 2 ou 3 atomes de carbone et n est de 4 à 20, où la concentration du glyphosate est de 240 à 550 g/ℓ sur la base du glyphosate acide.

2. Composition selon la revendication 1 où le groupe (OR₄)ₙ est un groupe poly(oxyde d'éthylène), un groupe poly(oxyde de propylène) ou un groupe mixte poly(oxyde d'éthylène/oxyde de propylène).

3. Composition selon la revendication 1 ou 2 où n est de 6 à 14.

4. Composition selon la revendication 3 où n est de 6 à 10.

5. Composition selon l'une quelconque des revendications précédentes où R₁ et R₂ sont l'un et l'autre méthyle.

6. Composition selon l'une quelconque des revendications précédentes où R₃ contient de 7 à 11 atomes de carbone.

7. Composition selon l'une quelconque des revendications 1 à 3 où le poly(oxyde d'alkylène)alcanol de formule (I) est l'alcool isotridécylique éthoxylé, propoxylé ou mixte ethoxylé/propoxylé où le degré d'alcoxylation est de 6 à 14.

8. Composition selon la revendication 7 où le poly(oxyde d'alkylène)alcanol de formule (I) est l'alcool isotridécylique ayant un degré d'alcoxylation de 8.

9. Composition selon l'une quelconque des revendications précédentes où la concentration du composé de formule (I) est de 1 à 50 g/l.

10. Composition selon la revendication 9 où la concentration du composé de formule (I) est de 1 à 20 g/l.

11. Composition selon l'une quelconque des revendications précédentes qui contient un adjuvant augmentant les bioperformances supplémentaire.

12. Composition selon la revendication 11 où l'adjuvant augmentant les bioperformances supplémentaire est un alkylglycoside.

13. Composition selon la revendication 11 ou 12 où l'adjuvant augmentant les bioperformances supplémentaire est présent à une concentration de 80 g/l à 250 g/l.

14. Composition selon la revendication 12 ou 13 qui contient en outre une alkylamine alcoxylée.

15. Composition selon l'une quelconque des revendications précédentes qui comprend un antimousse supplémentaire pour réduire le moussage du produit dilué.

16. Composition selon l'une quelconque des revendications précédentes où le glyphosate est un sel de potassium.

17. Composition selon la revendication 16 où la concentration du glyphosate est de 400 à 500 g/l sur la base du glyphosate acide.

18. Composition selon l'une quelconque des revendications 1 à 15 où le glyphosate est un sel d'ammonium.

19. Composition selon la revendication 18 où la concentration du glyphosate est de 340 à 380 g/l sur la base du glyphosate acide.

20. Composition selon la revendication 18 ou 19 qui contient en outre du sulfate d'ammonium à une concentration de 80 à 140 g/l.

21. Procédé de réduction du moussage d'une composition de concentré de glyphosate ayant une concentration de 240 à 550 g/l sur la base du glyphosate acide qui comprend l'incorporation dans la composition d'un poly(oxyde d'alkylène)alcanol de formule (I) selon la revendication 1.

22. Procédé pour détériorer gravement ou tuer des plantes indésirables qui comprend la dilution d'une composition de concentré de glyphosate selon l'une quelconque des revendications 1 à 20 puis l'application aux plantes d'une quantité efficace du point de vue herbicide de ladite composition diluée.
